# FASCICULE DE BREVET EUROPEEN

(11) **EP 3 808 593 B1**
(45) Date de publication et mention de la délivrance du brevet: **10.08.2022**
(21) Numéro de dépôt: 20199974.5
(22) Date de dépôt: 05.10.2020
(51) Int. Cl.: B60N 2/02, B60N 2/20, B60N 2/75

(54) **SIÈGE À DOSSIER RÉVERSIBLE DOTÉ D'ACCOUDOIRS FIXES**
SITZ MIT REVERSIBLER RÜCKENLEHNE, DER MIT FESTSTEHENDEN ARMLEHNEN AUSGESTATTET IST
SEAT WITH REVERSIBLE BACKREST PROVIDED WITH FIXED ARMRESTS

(30) Priorité: 17.10.2019 FR 1911577
(43) Date de publication de la demande: 21.04.2021
(73) Titulaire: Renault s.a.s, 92100 Boulogne Billancourt (FR)
(72) Inventeur: HEWAK, Gregor, 95490 VAUREAL (FR); BEZEAULT, Loic, 78150 LE CHESNAY (FR); THIS, Jerome, 78390 BOIS D'ARCY (FR)
(74) Mandataire: Renault Group

(56) Documents cités:
- DE-U1- 29 800 607
- DE-U1- 29 818 906
- JP-A- S5 143 512
- US-A- 442 984

## Description

La présente invention concerne un siège à dossier réversible doté d'accoudoirs fixes.

Pour certains types de véhicule, notamment les véhicules autonomes, il peut être intéressant de pouvoir modifier la position d'un siège initialement orienté face à la route en une position dos à la route, pour permettre à l'occupant qui serait assis sur ledit siège de faire face à des occupants qui seraient assis derrière lui. En effet, dans le cadre par exemple de véhicules autonomes, le conducteur n'a plus à se soucier de la route et il pourrait alors avoir envie de se tourner vers des occupants qui seraient assis derrière lui, afin de pouvoir discuter et/ou jouer avec eux, dans un certain confort.

Le brevet US7281761 B2 se rapporte à un siège réversible pouvant passer d'une position face à la route à une position dos à la route. Cette transformation du siège est réalisée au moyen d'une translation du dossier le long de l'assise. Le modèle d'utilité DE 298 00 607 U1 divulgue un autre exemple de siège réversible de l'art antérieur.

Un siège selon l'invention permet de passer d'une position face à la route à une position dos à la route avec simplicité et rapidité, en rendant la position dos à la route plus confortable que la position face à la route.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

L'invention a pour objet un siège de véhicule comprenant une assise et un dossier réversible, ledit siège pouvant passer d'une position face à la route à une position dos à la route.

Selon l'invention, le siège comprend deux bras possédant chacun une première extrémité montée pivotante autour d'un axe du dossier et une deuxième extrémité montée pivotante autour d'un axe d'un élément de structure fixe placé sous l'assise, ledit siège étant apte à passer de la position face à la route pour laquelle le dossier est placé d'un côté de l'assise et les bras sont rangés le long dudit siège, à la position dos à la route pour laquelle le dossier a été déplacé vers un côté opposé de l'assise sous l'effet d'un pivotement des bras autour de l'élément de structure, lesdits bras se transformant en accoudoir lors de ce pivotement.

Autrement dit, un siège selon l'invention passe d'une position face à la route pour laquelle il est dépourvu d'accoudoirs à une position dos à la route pour laquelle il est doté d'accoudoirs. Il est à noter qu'entre ces deux positions, l'assise peut, soit rester fixe, soit pivoter. Il est avantageusement supposé que le dossier se déplace suivant un axe longitudinal du véhicule et donc que le côté de l'assise et le côté opposé de ladite assise entre lesquels se déplace le siège sont alignés suivant un axe longitudinal du véhicule. Dans la position face à la route, les deux bras sont rangés le long de l'assise et du dossier et ne saillent donc ni de l'assise ni du dossier. Pour cette configuration, les deux bras n'ont aucune fonction particulière. Pour atteindre la position dos à la route, les deux bras pivotent en entrainant dans leur mouvement le dossier, ce pivotement plaçant directement les bras dans une configuration d'accoudoirs. En effet, pour se transformer en accoudoirs, les bras conservent leur forme initiale et ne subissent aucune modification structurelle. Ces bras ont donc une double fonction : celle de se transformer en accoudoirs et celle de servir d'organes de rotation pour le dossier entre la position face à la route et dos à la route. Préférentiellement l'axe de rotation du dossier et l'axe de rotation de l'élément de structure sont parallèles et s'étendent selon une direction transversale du véhicule. Les bras peuvent revêtir toute forme et bordent latéralement le siège de sorte qu'un individu qui serait assis sur ledit siège puisse reposer chacun de ses bras sur un accoudoir. Dans la position face à la route, le dossier est situé du côté d'une zone arrière de l'assise et dans la position dos à la route, le siège est situé du côté d'une zone avant de ladite assise. Il faut souligner que chaque bras conserve la même forme que le siège se retrouve dans la position face à la route ou dos à la route, seule son orientation dans l'espace change entre lesdites deux positions.

Selon une caractéristique possible de l'invention, le dossier présente deux faces sensiblement parallèles, dans la position face à la route le dos de l'occupant étant destiné à venir au contact de l'une desdites faces, et dans la position dos à la route le dos de l'occupant étant destiné à venir au contact de l'autre face dudit dossier. Pour cette configuration, le siège bascule d'un côté de l'assise vers un côté opposé de ladite assise, en conservant la même orientation dans l'espace. Autrement dit, si l'une des deux faces est située derrière l'autre face dans la position face à la route du siège, elle restera derrière ladite face lorsque le siège aura basculé dans la position dos à la route. Ainsi, par rapport à un axe longitudinal du véhicule, le dossier va posséder une face arrière et une face avant. Dans la position face à la route, un individu sera assis contre la face avant du dossier et dans la position dos à la route ledit individu sera assis contre la face arrière du dossier. Dans ces cas, le dossier est réversible car ses deux faces vont servir à venir au contact du dos d'un occupant suivant la position du siège. Le terme occupant désigne une personne qui serait assise sur le siège.

Selon une caractéristique possible de l'invention, dans la position face à la route le dossier saille au-dessus d'une zone arrière de l'assise et dans la position dos à la route le dossier saille au-dessus d'une zone avant de ladite assise. Les notions d'« arrière » et d' « avant » sont à considérer par rapport à un axe longitudinal du véhicule.

Selon une caractéristique possible de l'invention, dans la position face à la route le dossier repose sur la zone arrière de l'assise en provoquant un relèvement de la partie avant de l'assise, dans la position dos à la route le dossier venant reposer sur la zone avant de l'assise en provoquant un relèvement de la zone arrière de ladite l'assise. De cette manière, que ce soit dans la position face à la route ou dos à la route, la partie de l'assise qui est la plus éloignée du dossier, est légèrement relevée permettant d'accroitre le confort d'assise sur le siège. Avantageusement, le pivotement de l'assise est réalisé par inertie, sous l'effet du poids du dossier.

Selon une caractéristique possible de l'invention, chaque bras possède un premier segment rectiligne dont une extrémité libre correspond à la première extrémité du bras, et un deuxième segment rectiligne en continuité dudit premier segment et dont une extrémité libre correspond à la deuxième extrémité du bras, lesdits deux segments faisant entre eux un angle compris entre 90° et 135°. Autrement dit, le premier segment est apte à pivoter autour de l'axe du dossier et le deuxième segment est apte à pivoter autour de l'axe de l'élément de structure.

Selon une caractéristique possible de l'invention, dans la position face à la route le premier segment est aligné sur le dossier et le deuxième segment est aligné sur l'assise, dans la position dos à la route le premier segment saillant du dossier au-dessus de l'assise et le deuxième segment saillant de l'élément de structure selon une direction verticale. Autrement dit, dans la position face à la route les bras sont rangés le long du siège sans créer de volumes supplémentaires, et dans la position dos à la route les deux bras ont pivoté pour se transformer directement en accoudoirs. En première approximation, dans la position dos à la route, le premier segment s'étend selon une direction sensiblement horizontale à plus ou moins 15° et le deuxième segment s'étend selon une direction sensiblement verticale à plus ou moins 15°. Pour cette dernière configuration, le premier segment de chaque bras du siège va soutenir le bras d'un occupant qui serait assis sur ledit siège.

Selon un mode de réalisation préféré d'un siège selon l'invention, le siège comprend pour chaque bras, une première motorisation placée dans le dossier et destinée à faire pivoter ledit dossier autour de la première extrémité, le siège comprenant une deuxième motorisation placée sur l'élément de structure et destiné à faire pivoter le bras autour de la deuxième extrémité par rapport audit élément de structure. Il s'agit d'une configuration impliquant un moteur au niveau de chacune des extrémités d'un bras, le siège changeant de position au moyen d'un organe de commande activant les deux moteurs.

Selon une caractéristique possible de l'invention, la première motorisation et la deuxième motorisation sont constituées chacune par un vérin associé à un moteur électrique. Il s'agit d'un exemple de motorisation particulièrement adapté à un siège selon l'invention mais qui n'est absolument pas limitatif.

Selon un autre mode de réalisation préféré d'un siège selon l'invention, chaque bras recouvre une première roue dentée solidarisée au dossier et matérialisant la première extrémité du bras, une deuxième roue dentée solidarisée à l'élément de structure et matérialisant la deuxième extrémité du bras, une troisième roue intermédiaire située entre ladite première et ladite deuxième roues dentées au niveau du coude définit par les deux segments, et une courroie reliant la première et la deuxième roues en passant par la troisième roue, ledit siège comprenant un vérin motorisé doté d'une tige dont une extrémité est en contact avec une courroie secondaire placée autour de la deuxième roue, une translation de la tige entrainant un déplacement de la courroie secondaire provoquant une rotation de la deuxième roue qui induit un déplacement de la courroie et donc un pivotement simultané du bras et du dossier. Il s'agit d'une alternative au mécanisme de fonctionnement précédent impliquant deux moteurs par bras.

Selon un autre mode de réalisation préféré d'un siège selon l'invention, chaque bras est associé à un vérin doté d'une tige, une première biellette et une deuxième biellette dotée d'une fente, une première extrémité de la première biellette étant montée pivotante autour de l'axe de l'élément de structure et une deuxième extrémité de ladite biellette est insérée dans la fente, et une première extrémité de la deuxième biellette est montée pivotante autour de l'axe du dossier, une extrémité libre de la tige du vérin étant montée pivotante au niveau d'un point fixe du deuxième segment. La deuxième extrémité de la première biellette est munie d'un ergot qui est inséré dans la fente, ledit ergot étant configuré de manière à ne pas pouvoir être retiré de la fente. Il s'agit d'une alternative aux deux mécanismes de fonctionnement précédents.

Un siège selon l'invention présente l'avantage de passer d'une position face à la route à une position dos à la route, en conservant un encombrement constant au sein du véhicule. Il a de plus l'avantage d'impliquer deux bras qui ont une double fonction, celle de se transformer en accoudoirs pour la position dos à la route, et celle de servir d'organes de rotation pour le dossier afin de passer d'une position face à la route à une position dos à la route et vice versa. Il en résulte qu'un siège selon l'invention met en œuvre un nombre restreint de pièces, limitant ainsi les coûts et les risques de dysfonctionnement lors du passage d'une position à l'autre position.

On donne ci-après, une description détaillée de trois modes de réalisation préférés d'un siège selon l'invention, en se référant aux figures suivantes :
[Fig. 1] représente une vue en perspective d'un siège selon l'invention dans une position face à la route,
[Fig. 2] représente une vue en perspective d'un siège selon l'invention dans une position dos à la route,
[Fig. 3] représente est une vue de côté élargie d'un mécanisme de pivotement du dossier d'un premier mode de réalisation préféré d'un siège selon l'invention, dans une position dos à la route,
[Fig. 4] représente une vue de côté du premier mode de réalisation préféré d'un siège selon l'invention impliquant le mécanisme de la figure 3, ledit siège étant dans une position dos à la route,
[Fig. 5] représente une vue de côté du premier mode de réalisation préféré d'un siège selon l'invention impliquant le mécanisme de la figure 3, ledit siège étant dans une position face à la route
[Fig. 6] représente une vue de côté d'un deuxième mode de réalisation préféré d'un siège selon l'invention, dans une position face à la route,
[Fig. 7] représente une vue de côté du siège de la figure 6, ledit siège étant dans une position dos à la route,
[Fig. 8] représente une vue de côté d'une première position intermédiaire du deuxième mode de réalisation préféré d'un siège selon l'invention, entre la position face à la route et la position dos à la route.
[Fig. 9] représente une vue de côté d'une deuxième position intermédiaire du deuxième mode de réalisation préféré d'un siège selon l'invention, entre la position face à la route et la position dos à la route.
[Fig. 10] représente une vue de côté d'une troisième position intermédiaire du deuxième mode de réalisation préféré d'un siège selon l'invention, entre la position face à la route et la position dos à la route.
[Fig. 11] représente une vue de côté d'une quatrième position intermédiaire du deuxième mode de réalisation préféré d'un siège selon l'invention, entre la position face à la route et la position dos à la route.
[Fig. 12] représente une vue de côté d'une cinquième position intermédiaire du deuxième mode de réalisation préféré d'un siège selon l'invention, entre la position face à la route et la position dos à la route.
[Fig. 13] représente une vue de côté d'un troisième mode de réalisation préféré d'un siège selon l'invention dans une position dos à la route,
[Fig. 14] représente une vue de côté du troisième mode de réalisation préféré d'un siège selon l'invention, dans une position face à la route,

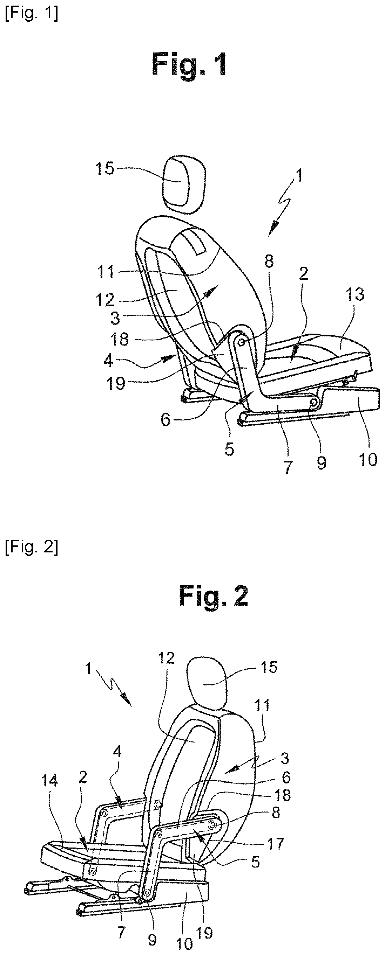

Un siège 1 selon l'invention comprend une assise 2 et un dossier 3 et est apte à passer d'une position face à la route comme illustré à la figure 1 à une position dos à la route comme illustré à la figure 2. Une position face à la route est une position de siège standard, pour laquelle une personne qui serait assise sur ledit siège visualiserait une scène placée devant le véhicule, dans le sens de la marche dudit véhicule. Dans la position dos à la route, la personne qui serait assise sur ledit siège visualiserait une scène placée derrière le véhicule dans une direction qui serait opposée au sens de marche du véhicule. Il est avantageusement supposé que l'assise 2 et le dossier 3 possèdent chacun une structure qui est recouverte par une mousse et un garnissage.

En se référant à la figure 1, un siège 1 selon l'invention comprend deux bras latéraux 4, 5 comportant chacun un premier segment rectiligne 6 et un deuxième segment rectiligne 7 prolongeant ledit premier segment 6. Ces deux bras 4, 5 sont alignés selon un axe transversal Y du véhicule et bordent latéralement le siège 1. Les deux segment 6, 7 d'un même bras 4, 5 font entre eux un angle qui est supérieur ou égal à 90°, et préférentiellement un angle compris entre 90° et 135°, lesdits deux segments 6, 7 étant fixes l'un par rapport à l'autre et définissant une structure figée, inamovible. Une extrémité libre 8 du premier segment 6 est montée pivotante autour d'un axe solidaire du dossier 3 qui est parallèle à un axe transversal Y du véhicule. Une extrémité libre 9 du deuxième segment 7 est montée pivotante autour d'un axe solidaire d'un élément de structure 10 de l'assise 2 du siège 1 qui est situé sous l'assise 2 dudit siège 1, ledit axe étant parallèle à un axe transversal Y du véhicule. De cette manière, chacun desdits deux bras 4, 5 est monté pivotant à la fois sur le dossier 3 et sur l'élément de structure 10. Chaque bras 4, 5 présente une structure en métal et un revêtement extérieur de type textile ou plastique. Le dossier 3 présente une face avant 11 et une face arrière12 sensiblement parallèles, c'est-à-dire parallèles à plus ou moins 15°, chacune desdites faces 11, 12 étant amenées à venir au contact du dos d'une personne qui serait assise sur le siège 1, suivant que le siège 1 est dans la position face à la route ou dos à la route.

En se référant à la figure 1, dans la position face à la route, l'assise 2 est inclinée de façon à présenter une zone avant 13 surélevée et le dossier 3 est en appui sur une zone arrière 14 de ladite assise 2 en étant légèrement incliné vers l'arrière par rapport à une direction verticale. Les deux bras 4, 5 sont rangés le long du siège 1 de sorte que les premiers segments 6 soient alignés le long du dossier 3 et les deux deuxièmes segments 7 soient horizontaux et s'étendent selon un axe longitudinal X du véhicule. Dans cette position face à la route, le dos d'une personne qui serait assise sur ledit siège vient au contact de la face avant 11 du dossier 3.

Pour passer de la position face la route à la position dos à la route comme illustré à la figure 2, les deux bras 4, 5 sont mis en rotation vers l'avant autour des axes solidaires de l'élément de structure 10. Lors de cette mise en rotation, les deux bras 4, 5 provoquent un déplacement du dossier 3 vers l'avant de l'assise 2 en conservant son orientation dans l'espace. En effet, durant ce déplacement, le dossier 3 pivote légèrement autour du premier segment 6 de chaque bras 4, 5 tout en maintenant la face avant 11 devant la face arrière 12. L'amplitude de rotation du dossier 3 est délimitée par les deux bords rectilignes 17, 18 délimitant une échancrure 19 pratiquée dans ledit dossier 3. Dans la position face à la route, le premier segment 6 de chaque bras 4, 5 est en appui contre l'un desdits deux bords 17, 18 de l'échancrure 19 et lorsque le siège se retrouve dans la position dos à la route, ledit premier segment 6 se retrouve en appui contre l'autre bord 17, 18 de ladite échancrure 19. De façon avantageuse, les deux bords 17, 18 de l'échancrure 19 font entre eux un angle approximativement de 55°. En effet, chaque bras 4, 5 pivote ainsi d'un angle supérieur ou égal à 90°, et préférentiellement d'un angle compris entre 90° et 135°. De cette manière, les premiers segments 6 des deux bras 4, 5 s'étendent au-dessus de l'assise 2 suivant un axe sensiblement horizontal et longitudinal X du véhicule, tandis que les deux deuxièmes segments 7 s'étendent parallèlement au dossier 3 en étant placé à l'arrière desdits premiers segments 6. Dans cette configuration, les deux bras 4, 5 sont assimilables à deux accoudoirs, les premiers segments 6 desdits bras 4, 5 servant à supporter les bras d'une personne qui serait assise sur ledit siège 1. Dans la position dos à la route, le dossier 3 se retrouve en appui sur la zone avant 13 de l'assise 2, qui a elle-même pivoté autour d'un axe horizontal et transversal Y du véhicule, de manière à surélever sa zone arrière 14. Le pivotement de l'assise 2 étant réalisé par inertie sous l'effet du poids du dossier 3.

Pour résumer, un siège 1 selon l'invention passe d'une configuration face à la route pour laquelle :
- Le dossier 3 repose sur une zone arrière 14 de l'assise 2,
- L'assise 2 est inclinée de sorte qu'une zone avant 13 de ladite assise 2 est surélevée
- Les bras 4, 5 sont rangés le long du siège 1 sans saillir de celui-ci,
- Le dos d'une personne qui serait assise sur le siège 1 vient en appui contre la face avant 11 du dossier 3,

A une position dos à la route pour laquelle :
- Le dossier repose sur une zone avant 13 de l'assise 2,
- L'assise 2 est inclinée de façon qu'une zone arrière 14 de l'assise soit surélevée,
- Les bras 4, 5 ont pivoté et se sont déployés pour servir d'accoudoir,
- Le dos d'une personne qui serait assise sur le siège 1 vient en appui contre la face arrière 12 du dossier 3,

Dans l'l'hypothèse où le dossier 3 est équipé d'un appui-tête 15, il est nécessaire de déplacer ledit appui-tête 15 sur le dossier 3 du siège 1 entre la position face à la route et dos à la route. En effet, en se référant à la figure 1, lorsque le siège 1 est dans la position face à la route, l'appui-tête 15 est légèrement incliné vers l'avant par rapport au dossier 3 du siège 1. En se référant à la figure 2, lorsque le siège 1 est dans la position dos à la route, l'appui-tête 15 doit être légèrement incliné vers l'arrière du dossier 3. Ce changement de position de l'appui-tête 15 entre les deux positions du siège 1, peut s'effectuer manuellement en translatant l'appui-tête le long de rails incurvés placés au sommet du dossier 3. Ce changement peut également être réalisé au moyen d'un élément de commande associé à une motorisation.

Pour passer d'une configuration face à la route à une configuration dos à la route, le siège 1 conserve le même encombrement suivant un axe transversal Y du véhicule et conserve également le même encombrement selon un axe longitudinal X du véhicule, sauf que ledit encombrement est légèrement translaté suivant ledit axe longitudinal. Le passage d'une position à l'autre pour le siège 1 peut s'effectuer, soit manuellement en attrapant le dossier 3 et en le basculant de l'autre côté de l'assise, soit automatiquement au moyen d'un organe de commande associée à une motorisation.

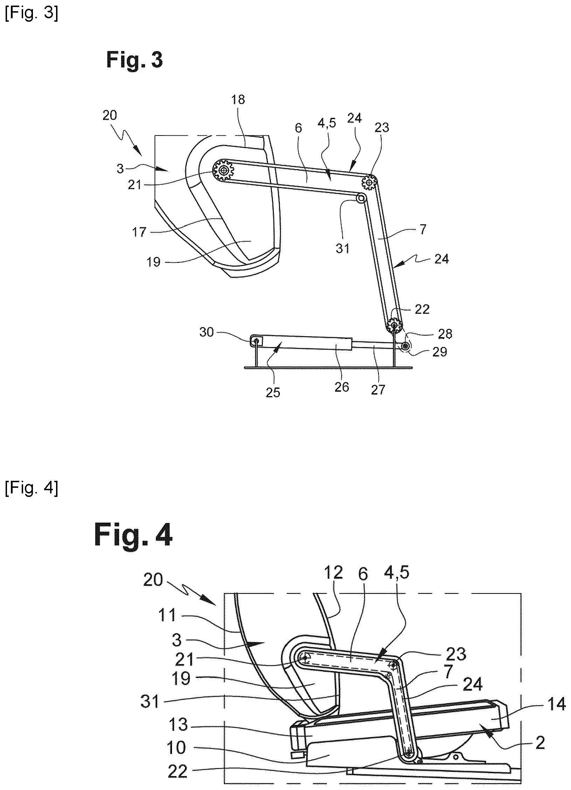

En se référant aux figures 3, 4 et 5, selon un premier mode de réalisation préféré d'un siège 20 selon l'invention, chaque bras 4, 5 sert de carter à un mécanisme de pivotement desdits bras 4, 5 et du dossier 3 pour passer d'une position du siège 20 face à la route à une position dos à la route. Ce mécanisme comprend une première roue 21 dentée fixée à la structure du dossier 3 et apte à pivoter autour de l'axe solidaire du dossier 3, une deuxième roue 22 dentée fixée au deuxième segment 7 de chaque bras 4, 5 et apte à pivoter autour de l'axe solidaire de l'élément de structure 10 de l'assise 2 et une troisième roue dentée 23 placée au niveau du coude crée par les deux segments 6, 7 de chaque bras 6, 7. Cette troisième roue 23 est placée entre la première 21 et la troisième roue 23 et est apte à pivoter à l'intérieur de chaque bras 4, 5. Un galet 31 tendeur est placée à proximité de la troisième roue 23. Une courroie 24 est enfilée autour de la première roue 21 et de la deuxième roue 22 et vient en appui contre la troisième roue 23 et contre le galet tendeur 31, ladite troisième roue 23 et ledit galet 31 servant de renvoi d'angle à ladite courroie 24. Il est à noter que la troisième roue 23 est placée à l'intérieur de la courroie 24, tandis que le galet tendeur 31 est placé à l'extérieur de ladite courroie 24.

En se référant à la figure 3, un vérin électrique 25 est fixé à l'élément de structure 10 de l'assise 2. Ce vérin 25 possède un corps 26 duquel saille une tige 27 dont une extrémité libre 28 vient en appui contre une courroie secondaire 29 qui est enfilée autour de la deuxième roue 22 et qui est fixée à celle-ci. Une extrémité 30 du corps 26 qui est opposée à celle par laquelle saille la tige 27 est montée pivotante autour d'un axe solidaire de l'élément de structure 10 de l'assise 2. De cette manière, le vérin 25 peut pivoter autour dudit axe et la tige 27 dudit vérin 25 peut coulisser dans le corps 26 pour saillir de façon plus ou moins importante dudit corps 26.

Le déclenchement du vérin 25 va provoquer un mouvement de rotation de la courroie secondaire 29, qui va induire une mise en rotation de la deuxième roue 22 à laquelle ladite courroie secondaire 29 est solidarisée. La mise en rotation de la deuxième roue 22 va entrainer une mise en rotation de la première roue 21 via la troisième roue 23 et le galet tendeur 31. Une mise en rotation simultanée de la deuxième 22 et de la première 21 roue entraine un pivotement simultané du bras relativement à l'élément de structure 10 de l'assise 2, et du dossier 3 relativement audit bras 4, 5. Après avoir fait pivoter la courroie secondaire 29 avec l'amplitude angulaire voulue au moyen d'un actionnement adapté du vérin 25, le siège 20 se retrouve dans la position dos à la route. Pour ce mode de réalisation, la position de l'appui-tête 15 entre la position face à la route et la position dos à la route est ajustable indépendamment du mécanisme de pivotement.

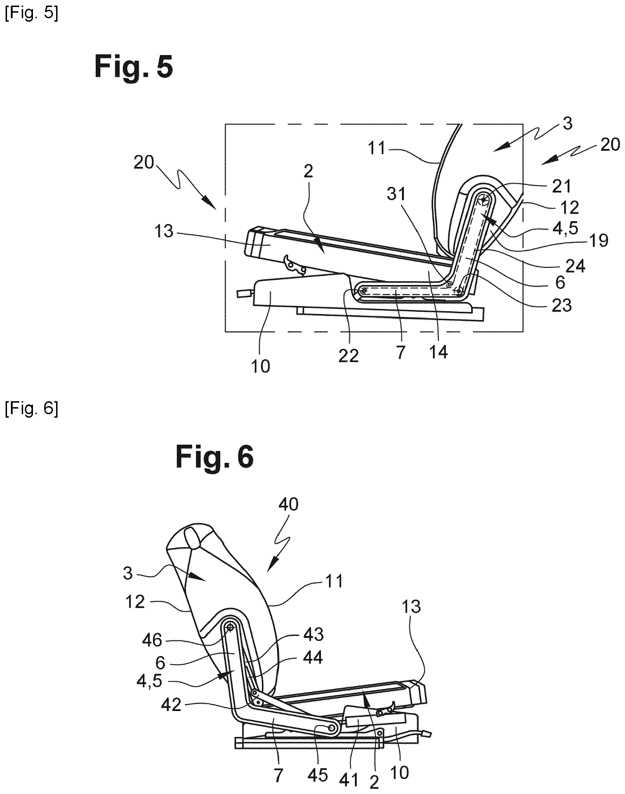

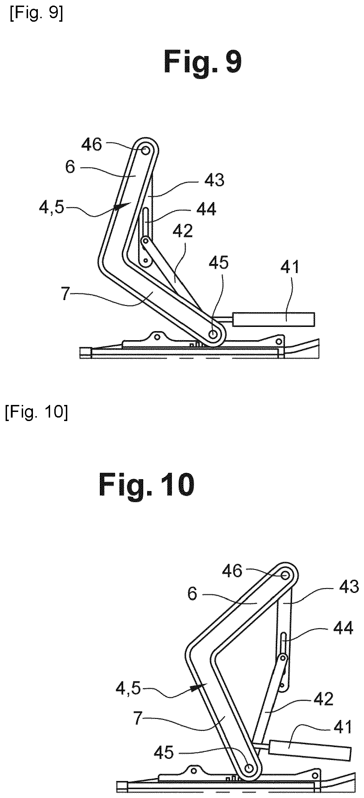

En se référant aux figures 6 à 12, selon un deuxième mode de réalisation préféré d'un siège 40 selon l'invention, le siège 40 présente un mécanisme de pivotement des bras 4, 5 pour passer de la position face à la route à la position dos à la route, impliquant un vérin électrique 41, une première biellette 42 et une deuxième biellette 43 ajourée, dotée d'une fente allongée 44. Les deux biellettes 42, 43 sont allongées et la fente 44 s'étend le long d'un axe longitudinal de la deuxième biellette 43, sur moins de la moitié de la longueur totale de ladite deuxième biellette 43. Une extrémité libre 45 de la première biellette 42 est montée pivotante autour de l'axe solidaire de l'élément de structure 10 de l'assise 2. Une extrémité libre 46 de la deuxième biellette 43 est montée pivotante autour de l'axe solidaire du dossier 3. Une autre extrémité libre 47 de la première biellette 42 présente un ergot qui est inséré dans la fente 44 de la deuxième biellette 43. Le vérin 41 présente un corps 48 et une tige 49 dont une extrémité libre est solidarisée au deuxième segment 7 de chaque bras 4, 5. Une extrémité avant 50 du corps 48 est montée pivotante autour d'un axe parallèle à un axe transversal Y du véhicule. Le vérin 41 est placé devant chaque bras 4, 5 au niveau de l'élément de structure 10 de l'assise 2, et s'étend selon une direction sensiblement horizontale et longitudinale X du véhicule.

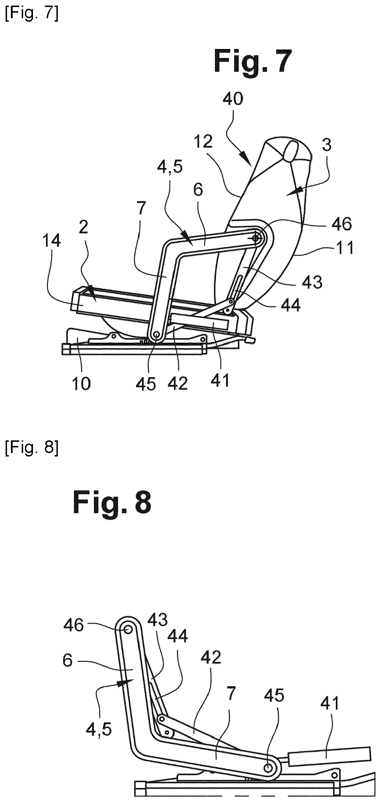

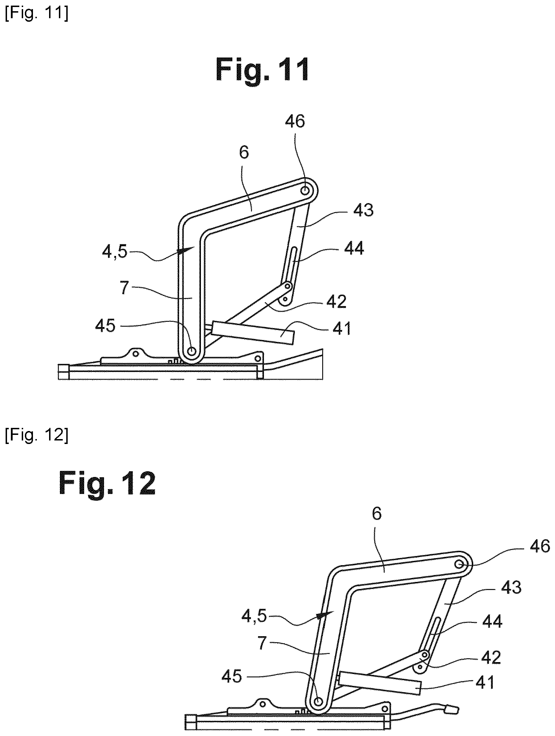

A partir de la position face à la route comme illustré à la figure 6, un actionnement du vérin 41 va provoquer une translation de la tige 49 qui va rentrer dans le corps 48, entrainant un pivotement vers l'avant du bras 4, 5. Les deux biellettes 42, 43 se déplacent l'une relativement à l'autre au moyen d'une translation de l'ergot dans la fente 44. Le mouvement des deux biellettes 41, 43 est dicté par leur dimension et leur agencement par rapport au bras 4, 5. Les figures 8, 9, 10, 11 et 12 illustrent par ordre chronologique le déplacement des bras 4, 5 et des deux biellettes 42, 43 jusqu'à ce que le siège 40 occupe la position dos à la route comme illustré aux figures 7 et 12. Durant ce déplacement, la deuxième biellette 43 vient en appui contre l'un des bords 17, 18 de l'échancrure 19 du dossier 3, provoquant la rotation dudit dossier 3 par rapport au bras 4, 5 afin que ledit dossier soit positionné de façon adaptée lorsque le siège 40 parvient à la position dos à la route.

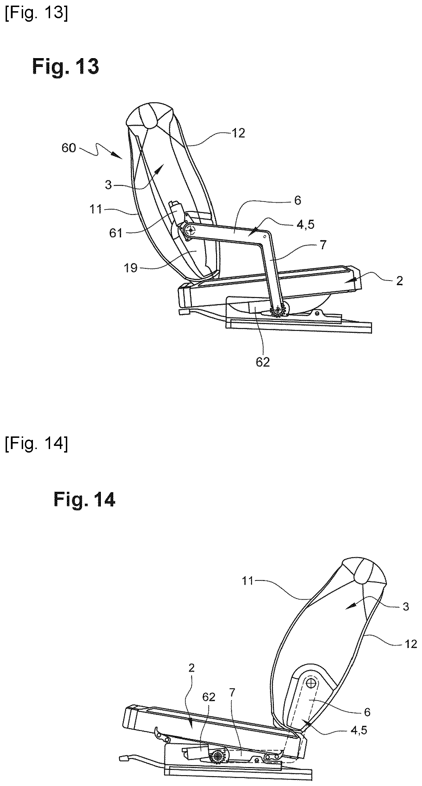

En se référant aux figures 13 et 14, selon un troisième mode de réalisation préféré d'un siège 60 selon l'invention, un premier moteur 61 est fixé à la structure du dossier 3 pour permettre audit dossier 3 de pivoter relativement à chaque bras 4, 5. Un deuxième moteur 62 est fixé à l'élément de structure 10 de l'assise 2 pour assurer la rotation de chaque bras 4, 5. Chaque moteur 61, 62 est avantageusement constitué par un vérin rotatif associé à un moteur électrique. Un troisième moteur non visible sur les figures est fixé à la structure du dossier 3 pour assurer la rotation de l'appui-tête 15 lorsque le siège passe d'une position à l'autre. L'actionnement d'un bouton de commande, préférentiellement placé au niveau de l'élément de structure 10 de l'assise 2, permet d'activer le premier moteur 61 et le deuxième moteur 62 pour assurer une bonne cinématique de basculement du siège 60. Le troisième moteur permettant de régler la position de l'appui-tête 15 sur le dossier 3 est déclenché indépendamment des deux autres moteurs 61, 62.

## Revendications

1. Siège (1, 20, 40, 60) de véhicule comprenant une assise (2) et un dossier (3) réversible, ledit siège pouvant passer d'une position face à la route à une position dos à la route, où ledit siège comprend deux bras (4, 5) possédant chacun une première extrémité (8) montée pivotante autour d'un axe du dossier (3) et une deuxième extrémité (9) montée pivotante autour d'un axe d'un élément de structure (10) fixe placé sous l'assise (2), où ledit siège (1, 20, 40, 60) est apte à passer de la position face à la route pour laquelle le dossier (3) est placé d'un côté (14) de l'assise (2) et les bras sont rangés le long dudit siège (1, 20, 40, 60), à la position dos à la route pour laquelle le dossier (3) a été déplacé vers un côté opposé de l'assise (2) sous l'effet d'un pivotement des bras (4, 5) autour de l'élément de structure (10), **caractérisé en ce que** lesdits bras (4, 5) se transforment en accoudoir lors de ce pivotement.

2. Siège de véhicule selon la revendication 1, **caractérisé en ce que** le dossier (3) présente deux faces (11, 12) sensiblement parallèles, et **en ce que** dans la position face à la route le dos de l'occupant est destiné à venir au contact de l'une desdites faces (11, 12), et dans la position dos à la route le dos de l'occupant est destiné à venir au contact de l'autre face (11, 12) dudit dossier (3).

3. Siège de véhicule selon l'une quelconque des revendications 1 ou 2, **caractérisé en ce que** dans la position face à la route le dossier (3) saille au-dessus d'une zone arrière (14) de l'assise (2) et dans la position dos à la route le dossier (3) saille au-dessus d'une zone avant (13) de ladite assise (2).

4. Siège de véhicule selon la revendication 3, **caractérisé en ce que** dans la position face à la route le dossier (3) repose sur la zone arrière (14) de l'assise (2) en provoquant un relèvement de la partie avant (13) de l'assise (2), et **en ce que** dans la position dos à la route le dossier (3) vient reposer sur la zone avant (13) de l'assise (2) en provoquant un pivotement de l'assise (2) se traduisant par un relèvement de la zone arrière (14) de ladite assise (2).

5. Siège de véhicule selon l'une quelconque des revendications 1 à 4, **caractérisé en ce que** chaque bras (4, 5) possède un premier segment (6) rectiligne dont une extrémité libre correspond à la première extrémité (8) du bras (4, 5), et un deuxième segment (7) rectiligne en continuité dudit premier segment (6) et dont une extrémité libre correspond à la deuxième extrémité (9) du bras (4, 5), et **en ce que** lesdits deux segments (6, 7) font entre eux un angle compris entre 90° et 135°.

6. Siège de véhicule selon la revendication 5, **caractérisé en ce que** dans la position face à la route le premier segment (6) est aligné sur le dossier (3) et le deuxième segment (7) est aligné sur l'assise (2), et **en ce que** dans la position dos à la route le premier segment (6) saille du dossier (3) au-dessus de l'assise (2) et le deuxième segment (7) saille de l'élément de structure (10) selon une direction verticale.

7. Siège de véhicule selon l'une quelconque des revendications 1 à 6, **caractérisé en ce qu'**il comprend pour chaque bras (4, 5), une première motorisation (61) placée dans le dossier (3) et destinée à faire pivoter ledit dossier (3) autour de la première extrémité (8), et **en ce qu'**il comprend une deuxième motorisation (62) placée sur l'élément de structure (10) et destiné à faire pivoter le bras (4, 5) autour de la deuxième extrémité (9) par rapport audit élément de structure (10).

8. Siège de véhicule selon la revendication 7, **caractérisé en ce que** la première motorisation (61) et la deuxième motorisation (62) sont constituées chacune par un vérin associé à un moteur électrique.

9. Siège de véhicule selon l'une quelconque des revendications 5 ou 6, **caractérisé en ce que** chaque bras (4, 5) recouvre une première roue (21) dentée solidarisée au dossier (3) et matérialisant la première extrémité (8) du bras (4, 5), une deuxième roue (22) dentée solidarisée à l'élément de structure (10) et matérialisant la deuxième extrémité (9) du bras (4, 5), une troisième roue (23) intermédiaire située entre ladite première et ladite deuxième roues (21, 22) dentées au niveau du coude définit par les deux segments (6, 7), et une courroie (24) reliant la première et la deuxième roues (21, 22) en passant par la troisième roue, et **en ce qu'**il comprend un vérin motorisé (25) doté d'une tige (27) dont une extrémité est en contact avec une courroie secondaire (29) placée autour de la deuxième roue (22), une translation de la tige (27) entrainant un déplacement de la courroie secondaire (29) provoquant une rotation de la deuxième roue (22) qui induit un déplacement de la courroie parer (24) et donc un pivotement simultané du bras (4, 5) et du dossier (3).

10. Siège de véhicule selon l'une quelconque des revendications 5 ou 6, **caractérisé en ce que** à chaque bras (4, 5) est associé un vérin (41) doté d'une tige, une première biellette (42) et une deuxième biellette (43) dotée d'une fente (44), et **en ce qu'**une première extrémité de la première biellette (42) est montée pivotante autour de l'axe de l'élément de structure (10) et une deuxième extrémité de ladite biellette (42) est insérée dans la fente (44), et une première extrémité de la deuxième biellette (43) est montée pivotante autour de l'axe du dossier (3), une extrémité libre de la tige du vérin (41) étant montée pivotante au niveau d'un point fixe du deuxième segment (7).

## Patentansprüche

1. Fahrzeugsitz (1, 20, 40, 60), welcher ein Sitzteil (2) und eine reversible Rückenlehne (3) umfasst, wobei der Sitz aus einer Position in Fahrtrichtung in eine Position entgegen der Fahrtrichtung überführt werden kann, wobei der Sitz zwei Arme (4, 5) umfasst, die jeweils ein erstes Ende (8), das um eine Achse der Rückenlehne (3) schwenkbar gelagert ist, und ein zweites Ende (9), das um eine Achse eines unter dem Sitzteil (2) angeordneten, feststehenden Strukturelements (10) schwenkbar gelagert ist, besitzen, wobei der Sitz (1, 20, 40, 60) aus der Position in Fahrtrichtung, bei welcher die Rückenlehne (3) an eine Seite (14) des Sitzteils (2) angeordnet ist und die Arme sich entlang des Sitzes (1, 20, 40, 60) erstrecken, in die Position entgegen der Fahrtrichtung überführbar ist, bei welcher die Rückenlehne (3) unter der Wirkung einer Schwenkung der Arme (4, 5) um das Strukturelement (10) zu einer gegenüberliegenden Seite des Sitzteils (2) hin verlagert worden ist,
**dadurch gekennzeichnet, dass** sich die Arme (4, 5) bei dieser Schwenkung in Armstützen verwandeln.

2. Fahrzeugsitz nach Anspruch 1, **dadurch gekennzeichnet, dass** die Rückenlehne (3) zwei im Wesentlichen parallele Seiten (11, 12) aufweist, und dadurch, dass in der Position in Fahrtrichtung der Rücken des Insassen dazu bestimmt ist, mit der einen der Seiten (11, 12) in Kontakt zu kommen, und in der Position entgegen der Fahrtrichtung der Rücken des Insassen dazu bestimmt ist, mit der anderen Seite (11, 12) der Rückenlehne (3) in Kontakt zu kommen.

3. Fahrzeugsitz nach einem der Ansprüche 1 oder 2, **dadurch gekennzeichnet, dass** in der Position in Fahrtrichtung die Rückenlehne (3) über einen hinteren Bereich (14) des Sitzteils (2) hinaus vorsteht und in der Position entgegen der Fahrtrichtung die Rückenlehne (3) über einen vorderen Bereich (13) des Sitzteils (2) hinaus vorsteht.

4. Fahrzeugsitz nach Anspruch 3, **dadurch gekennzeichnet, dass** in der Position in Fahrtrichtung die Rückenlehne (3) auf dem hinteren Bereich (14) des Sitzteils (2) ruht und dabei ein Anheben des vorderen Teils (13) des Sitzteils (2) hervorruft, und dadurch, dass in der Position entgegen der Fahrtrichtung die Rückenlehne (3) auf dem vorderen Bereich (13) des Sitzteils (2) zu ruhen kommt und dabei eine Schwenkung des Sitzteils (2) hervorruft, die in einem Anheben des hinteren Bereichs (14) des Sitzteils (2) zum Ausdruck kommt.

5. Fahrzeugsitz nach einem der Ansprüche 1 bis 4, **dadurch gekennzeichnet, dass** jeder Arm (4, 5) einen ersten geraden Abschnitt (6) besitzt, von dem ein freies Ende dem ersten Ende (8) des Armes (4, 5) entspricht, und einen zweiten geraden Abschnitt (7), der sich an den ersten Abschnitt (6) anschließt und von dem ein freies Ende dem zweiten Ende (9) des Armes (4, 5) entspricht, und dadurch, dass die zwei Abschnitte (6, 7) miteinander einen Winkel zwischen 90° und 135° bilden.

6. Fahrzeugsitz nach Anspruch 5, **dadurch gekennzeichnet, dass** in der Position in Fahrtrichtung der erste Abschnitt (6) an der Rückenlehne (3) ausgerichtet ist und der zweite Abschnitt (7) am Sitzteil (2) ausgerichtet ist, und dadurch, dass in der Position entgegen der Fahrtrichtung der erste Abschnitt (6) von der Rückenlehne (3) aus oberhalb des Sitzteils (2) vorsteht und der zweite Abschnitt (7) von dem Strukturelement (10) aus in einer vertikalen Richtung vorsteht.

7. Fahrzeugsitz nach einem der Ansprüche 1 bis 6, **dadurch gekennzeichnet, dass** er für jeden Arm (4, 5) einen ersten Motorantrieb (61) umfasst, der in der Rückenlehne (3) angeordnet ist und dazu bestimmt ist, ein Schwenken der Rückenlehne (3) um das erste Ende (8) zu bewirken, und dadurch, dass er einen zweiten Motorantrieb (62) umfasst, der an dem Strukturelement (10) angeordnet ist und dazu bestimmt ist, ein Schwenken des Armes (4, 5) um das zweite Ende (9) in Bezug auf das Strukturelement (10) zu bewirken.

8. Fahrzeugsitz nach Anspruch 7, **dadurch gekennzeichnet, dass** der erste Motorantrieb (61) und der zweite Motorantrieb (62) jeweils aus einem Zylinder bestehen, der mit einem Elektromotor verbunden ist.

9. Fahrzeugsitz nach einem der Ansprüche 5 oder 6, **dadurch gekennzeichnet, dass** jeder Arm (4, 5) ein erstes Zahnrad (21), das mit der Rückenlehne (3) fest verbunden ist und das erste Ende (8) des Armes (4, 5) verkörpert, ein zweites Zahnrad (22), das mit dem Strukturelement (10) fest verbunden ist und das zweite Ende (9) des Armes (4, 5) verkörpert, ein drittes Zwischenrad (23), das sich zwischen dem ersten und dem zweiten Zahnrad (21, 22) an dem durch die zwei Abschnitte (6, 7) definierten Winkel befindet, und einen Riemen (24), der das erste und das zweite Rad (21, 22) verbindet, wobei er über das dritte Rad verläuft, bedeckt, und dadurch, dass er einen motorbetriebenen Zylinder (25) mit einer Stange (27) umfasst, von der ein Ende sich mit einem Sekundärriemen (29) in Kontakt befindet, der um das zweite Rad (22) herum angeordnet ist, wobei eine Translation der Stange (27) eine Verlagerung des Sekundärriemens (29) zur Folge hat, die eine Drehung des zweiten Rades (22) hervorruft, welche Verlagerung des Riemens (24) und damit eine gleichzeitige Schwenkung des Armes (4, 5) und der Rückenlehne (3) bewirkt.

10. Fahrzeugsitz nach einem der Ansprüche 5 oder 6, **dadurch gekennzeichnet, dass** jedem Arm (4, 5) ein Zylinder (41) mit einer Stange, ein erster Schwingarm (42) und eine zweiter Schwingarm (43) mit einem Schlitz (44) zugeordnet sind, und dadurch, dass ein erstes Ende des ersten Schwingarmes (42) um die Achse des Strukturelements (10) schwenkbar gelagert ist und ein zweites Ende des Schwingarmes (42) in den Schlitz (44) eingesetzt ist und ein erstes Ende des zweiten Schwingarmes (43) um die Achse der Rückenlehne (3) schwenkbar gelagert ist, wobei ein freies Ende der Stange des Zylinders (41) an einem feststehenden Punkt des zweiten Abschnitts (7) schwenkbar gelagert ist.

## Claims

1. Vehicle seat (1, 20, 40, 60) comprising a seat pan (2) and a reversible backrest (3), said seat being able to pass from a position facing towards the front to a position facing towards the rear, wherein said seat comprises two arms (4, 5) each having a first end (8) mounted so as to pivot about a shaft of the backrest (3) and a second end (9) mounted so as to pivot about a shaft of a fixed structural element (10) placed beneath the seat pan (2), wherein said seat (1, 20, 40, 60) is able to pass from the position facing towards the front for which the backrest (3) is placed on one side (14) of the seat pan (2) and the arms are stored along said seat (1, 20, 40, 60), to the position facing towards the rear for which the backrest (3) has been moved to an opposite side of the seat pan (2) under the effect of pivoting of the arms (4, 5) about the structural element (10), **characterized in that** said arms (4, 5) are converted into armrests during this pivoting.

2. Vehicle seat according to Claim 1, **characterized in that** the backrest (3) has two substantially parallel faces (11, 12), and **in that** in the position facing towards the front the back of the occupant is intended to come into contact with one of said faces (11, 12), and in the position facing towards the rear the back of the occupant is intended to come into contact with the other face (11, 12) of said backrest (3).

3. Vehicle seat according to either one of Claims 1 and 2, **characterized in that** in the position facing towards the front the backrest (3) projects above a rear zone (14) of the seat pan (2) and in the position facing towards the rear the backrest (3) projects above a front zone (13) of said seat pan (2).

4. Vehicle seat according to Claim 3, **characterized in that** in the position facing towards the front the backrest (3) rests on the rear zone (14) of the seat pan (2) bringing about raising of the front part (13) of the seat pan (2), and **in that** in the position facing towards the rear the backrest (3) comes to rest on the front zone (13) of the seat pan (2) bringing about pivoting of the seat pan (2) resulting in raising of the rear zone (14) of said seat pan (2).

5. Vehicle seat according to any one of Claims 1 to 4, **characterized in that** each arm (4, 5) has a first rectilinear segment (6) of which a free end corresponds to the first end (8) of the arm (4, 5), and a second rectilinear segment (7) in the continuation of said first segment (6) and of which a free end corresponds to the second end (9) of the arm (4, 5), and **in that** said two segments (6, 7) form between them an angle of between 90° and 135°.

6. Vehicle seat according to Claim 5, **characterized in that** in the position facing towards the front the first segment (6) is aligned with the backrest (3) and the second segment (7) is aligned with the seat pan (2), and **in that** in the position facing towards the rear the first segment (6) projects from the backrest (3) above the seat pan (2) and the second segment (7) projects from the structural element (10) in a vertical direction.

7. Vehicle seat according to any one of Claims 1 to 6, **characterized in that** it comprises, for each arm (4, 5), a first drive means (61) placed in the backrest (3) and intending to make said backrest (3) pivot about the first end (8), and **in that** it comprises a second drive means (62) placed on the structural element (10) and intended to make the arms (4, 5) pivot about the second end (9) with respect to said structural element (10).

8. Vehicle seat according to Claim 7, **characterized in that** the first drive means (61) and the second drive means (62) are each made up of a jack associated with an electric motor.

9. Vehicle seat according to either one of Claims 5 and 6, **characterized in that** each arm (4, 5) covers a first toothed wheel (21) secured to the backrest (3) and embodying the first end (8) of the arm (4, 5), a second toothed wheel (22) secured to the structural element (10) and embodying the second end (9) of the arm (4, 5), a third intermediate wheel (23) situated between said first and second toothed wheels (21, 22) at the elbow defined by the two segments (6, 7), and a belt (24) connecting the first and second wheels (21, 22) passing via the third wheel, and **in that** it comprises a motorized jack (25) provided with a rod (27) of which one end is in contact with a secondary belt (29) placed around the second wheel (22), a translation of the rod (27) causing movement of the secondary belt (29) bringing about rotation of the second wheel (22) that induces movement of the belt (24) and therefore simultaneous pivoting of the arm (4, 5) and of the backrest (3).

10. Vehicle seat according to either one of Claims 5 and 6, **characterized in that** with each arm (4, 5) there is associated a jack (41) provided with a rod, a first connecting rod (42) and a second connecting rod (43) provided with a slot (44), and **in that** a first end of the first connecting rod (42) is mounted so as to pivot about the shaft of the structural element (10) and a second end of said connecting rod (42) is inserted in the slot (44), and a first end of the second connecting rod (43) is mounted so as to pivot about the shaft of the backrest (3), a free end of the rod of the jack (41) being mounted so as to pivot at a fixed point of the second segment (7) .
